# EUROPÄISCHE PATENTSCHRIFT

(11) **EP 1 309 951 B1**
(45) Veröffentlichungstag und Bekanntmachung des Hinweises auf die Patenterteilung: **20.04.2005**
(21) Anmeldenummer: 01960639.1
(22) Anmeldetag: 02.08.2001
(51) Int. Cl.: G07F 19/00, G07F 7/08

(54) **VERFAHREN UND ANORDNUNG ZUR ÜBERTRAGUNG EINES ELEKTRONISCHEN GELDBETRAGES AUS EINEM GUTHABENSPEICHER**
METHOD AND ARRANGEMENT FOR ELECTRONICALLY TRANSFERRING AN AMOUNT OF MONEY FROM A CREDIT ACCOUNT MEMORY
PROCEDE ET SYSTEME POUR LE TRANSFERT D'UNE SOMME D'ARGENT ELECTRONIQUE A PARTIR D'UNE MEMOIRE D'AVOIR

(30) Priorität: 18.08.2000 EP 00117854
(43) Veröffentlichungstag der Anmeldung: 14.05.2003
(73) Patentinhaber: SIEMENS AKTIENGESELLSCHAFT, 80333 München (DE)
(72) Erfinder: HORN, Michael, 81739 München (DE); WOLF, Hans-Hermann, 81829 München (DE)
(86) Internationale Anmeldenummer: PCT/EP2001/009217
(87) Internationale Veröffentlichungsnummer: WO 2002/017259

(56) Entgegenhaltungen:
- EP-A- 0 986 275
- EP-A- 1 107 196
- WO-A-98/34203
- WO-A-98/47116
- DE-A- 19 639 489
- FR-A- 2 726 102

## Beschreibung

Die Erfindung betrifft ein Verfahren sowie eine Anordnung zur Übertragung eines elektronischen Geldbetrages aus einem Guthabenspeicher auf ein Konto bzw. in einen anderen Guthabenspeicher über ein Telekommunikations- und Datennetz.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") Bedeutung erlangt, einer breiten Einführung dieses Zahlungsmittels stehen aber erhebliche Hindernisse im Wege.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentisierungscodes etc.) verbunden.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventielle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken.

EP-A-0 986 275 offenbart ein System und ein Verfahren zur Übertragung eines elektronischen Geldbetrages aus einem Geldsender-Guthabenspeicher in Form einer SIM-Karte eines Mobiltelefons auf ein Konto eines Geldempfängers über ein Telekommunikations- und Datennetz. Hierbei tauschen Geldsender und Geldempfänger (Dienstleister) Datensätze über das Mobilfunknetz aus. Der Geldempfänger kann hierbei beispielsweise Terminals in der Form von herkömmlichen Mobiltelefonen verwenden. Nach Übermittlung der transaktionsreievanten Daten und einer Authentisierung wird die Deckung des Guthabenspeichers geprüft und entsprechend eine Umbuchung vorgenommen. Schließlich werden beide Parteien benachrichtigt.

Der Erfindung liegt daher die Aufgabe zugrunde, ein Verfahren und eine Anordnung zur vereinfachten Abwicklung von Zahlungsverkehr unter Nutzung eines Datennetzes anzugeben.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 9.

Die Erfindung schließt den wesentlichen Gedanken ein, ein weitgehend universelles Zahlungsverfahren auf der Grundlage eines elektronischen Guthabens (Prepaid-Konto bzw. -Karte) anzugeben, welches für eine Zahlungsabwicklung im sogenannten B2C(Business-2-Consumer)-Bereich wie auch im C2C(Consumer-2-Consumer)-Bereich anwendbar ist, also sowohl den Einkauf in realen und virtuellen Geschäften, die Bezahlung in gastronomischen oder kulturellen Einrichtungen etc. als auch die "Übersendung" von Geldbeträgen im privaten Bereich ermöglicht. Sie schließt weiter den Gedanken ein, hierzu die Möglichkeiten eines verknüpften Telekommunikations- und Datennetzes zu nutzen, und zwar insbesondere die Möglichkeit einer Abwicklung in Echtzeit (Real Time). Unter einem elektronischen Guthaben wird hier ein Speicherinhalt eines über ein Telekommunikations- bzw. Datennetz zur Durchführung von Zahlungsverkehr handhabbaren Guthabenspeichers verstanden - grundsätzlich unabhängig davon, ob der Speicher tatsächlich ein vorausbezahltes Guthaben aufweist oder ein Guthabenbetrag erst zu einem späteren Zeitpunkt transferiert wird.

Kernstück der vorgeschlagenen Anordnung und des vorgeschlagenen Verfahrens ist ein Transaktions-Server, der auf eine Transaktions-Datenbasis zugreift, in der die für eine Übertragung von Prepaid-Guthaben relevanten Daten gespeichert sind. Initiiert wird der Übertragungsvorgang durch das Ausle-sen eines Datenträgers bzw. Datenendgerätes, in dem ein für die gezielte Auslösung der Transaktion hinreichender Datensatz des Geldsenders gespeichert ist, mit einem beim Geldempfänger vorhandenen Lesegerät. Dieses steht seinerseits über ein Telekommunikations-Endgerät mit dem Transaktions-Server in Verbindung.

Das vorgeschlagene Verfahren bietet als Echtzeitverfahren eine gegenüber bekannten Zahlungsabwicklungsverfahren verbesserte Transparenz und Zuverlässigkeit und ist insbesondere auch von Personen nutzbar, denen kein Kreditrahmen gewährt wird. Der Nutzer muß lediglich über ein vorausbezahltes Guthaben verfügen, das eine für die vorgesehene Geldübertragung ausreichende Deckung gewährleistet.

In der nachfolgenden Beschreibung und den Patentansprüchen wird der Inhaber des Prepaid-Guthabens, der einen Geldbetrag übertragen möchte und in einem (realen oder virtuellen) Geschäft als Käufer und in einer gastronomischen Einrichtung als Gast in Erscheinung tritt, allgemein als "Geldsender" bezeichnet. Der Empfänger des zu übertragenden Geldbetrages, bei dem es sich im täglichen Leben zumeist um den Inhaber bzw. Betreiber eines Geschäftes oder einer gastronomischen oder kulturellen Einrichtung o. ä. handeln wird, wird nachfolgend allgemein "Geldempfänger" bezeichnet. Geldempfänger und Geldsender können im übrigen auch Applikationen sein.

Jeder Geldempfänger, der die Möglichkeit der Geldübertragung von Prepaid-Guthaben eines Partners auf sein eigenes Konto nutzen möchte, muß einen die Geldübertragung realisierenden Dienst subskribieren. Mit dem Subskriptionsvorgang wird ein ihn betreffender Datensatz in einer Transaktions-Datenbasis ("Shopping-Datenbank") abgelegt. Das Konto des Geldempfängers muß zur Verwaltung elektronischer Guthaben geeignet sein; es kann sich hierbei insbesondere ebenfalls um ein Prepaid-Konto handeln. Der Geldempfänger kann mehrere Telefonnummern und auch mehrere Zielkonten für die Geldübertragung benutzen, wobei in diesem Fall natürlich alle einzusetzenden Telefonnummern und Konto-Identifikatoren aller Konten in der Shopping-Datenbank zu hinterlegen sind. (Mit dem Begriff "Konto-Identifikator" wird nachfolgend die Gesamtheit aus einer Kontonummer bzw. einem Kontencode und der gegebenenfalls benötigten Server-Adresse eines externen Servers verstanden, auf dem das Konto verwaltet wird.) Neben den erwähnten Daten umfaßt der in der Transaktions-Datenbasis gespeicherte Geldempfänger-Datensatz zweckmäßigerweise auch einen Namen bzw. Firmennamen.

Als hardwaremäßige Voraussetzung für die Nutzung des Dienstes benötigt der Geldempfänger ein Lesegerät für den bei der konkreten Anordnung eingesetzten Datenträger oder das geeignete Datenendgerät des Geldsenders. Es kann sich hierbei um ein an sich bekanntes Kartenlesegerät für Chipkarten oder Magnetstreifenkarten oder auch einfach um eine Schnittstelle zur Übertragung von transaktionsrelevanten Daten aus einem Speicher des erwähnten Datenendgerätes handeln. Es sollte zweckmäßigerweise über eine Ein- und eine Ausgabeeinrichtung zur Eingabe von Zusatzinformationen (etwa Geldbetrag, PIN, ...) bzw. zur Ausgabe von den Transaktionsvorgang betreffenden Informationen bzw. Signalen (Bestätigungs- bzw. Abbruchsignal, Aufforderungen zu bestimmten Eingaben ...) verfügen.

Sofern die konkrete Ausführung der vorgeschlagenen Lösung den Einsatz eines Datenendgerätes seitens des Geldsenders vorsieht, ist dieses bevorzugt zur drahtlosen Nachrichtenübertragung an das (natürlich entsprechend ausgebildete) Lesegerät, insbesondere mittels Infrarot- oder Bluetooth-Übertragung, ausgestattet. Es sind auch Kombinationen von Datenträger und Endgerät in der Hand des Geldsenders möglich - beispielsweise das Vorsehen eines den ersten Geldsender-Datensatz enthaltenden Barcodes (zur Auslesung durch ein Barcode-Lesegerät beim Geldempfänger) auf der Rückseite des im Besitz des Geldsenders befindlichen Endgerätes (Handy, Handheld-PC o. ä.).

Das System beinhaltet in vorteilhafter Weise die Möglichkeit der Zuordnung verschiedener Personen zu einem Prepaid-Guthaben als Geldsender, beispielsweise der Mitglieder einer Familie oder eines Vereins oder der Mitarbeiter einer Firma. Diese werden zweckmäßigerweise über individualisierte Datenträger oder Datenendgeräte verfügen, die jeweils mit den erforderlichen Authentisierungsmitteln ausgestattet sind.

Neben den Informationen zum Geldempfänger enthält die Shopping-Datenbank auch die zur Durchführung der Geldübertragung erforderlichen Informationen bezüglich des Geldsenders. Dieser (zweite) Geldsender-Datensatz enthält zweckmäßigerweise die Prepaid-Telefonnummer, erforderlichenfalls die Serveradresse eines externen Servers, auf dem das Prepaid-Guthaben verwaltet wird (auch hier nachfolgend gelegentlich als "Konto-Identifikator" bezeichnet), vorteilhafterweise auch den Server- und Betreibernamen und schließlich einen Authentisierungsdatensatz zur mindestens optionalen fallweisen Authentisierung größerer Geldtransfers.

Der auf dem Datenträger oder Datenendgerät, das der Geldsender zur Initiierung des Übertragungsvorganges einsetzt, gespeicherte erste Geldsender-Datensatz umfaßt in einer vorteilhaften Ausgestaltung der Erfindung einen Validierungscode (nachfolgend auch bezeichnet als VIN = Validation Number bezeichnet). Hierbei handelt es sich beispielsweise um eine mehrstellige Zufallszahl, die vom Betreiber des entsprechenden Dienstes vergeben wird und die Sicherheit bei der Nutzung des Datenträgers erhöht. Die VIN wird in dem Fall wirksam, daß ein Prepaid-Vertrag ausgelaufen ist und die zugehörige Prepaid-Telefonnummer nach einer gewissen Karenzzeit durch den Betreiber des Dienstes für einen anderen Kontoinhaber (und damit Geldsender) aktiviert wird. Sie sichert für diesen Fall, daß der ursprüngliche Inhaber der Prepaid-Rufnummer den gegebenenfalls bei ihm verbliebenen Datenträger (bzw. den entsprechend geladenen Speicher seines Datenendgerätes) nicht mißbräuchlich weiterhin für Geldübertragungen von einem nicht mehr in seinem Besitz stehenden Guthaben verwenden kann.

Eine weitere wesentliche Sicherheitskomponente stellt der bereits erwähnte Authentisierungsdatensatz im zweiten (in der Transaktions-Datenbasis zugreifbare) Geldsender-Datensatz dar. Dieser umfaßt insbesondere einen Authentisierungscode (PIN o. ä.) und/oder biometrische Daten des Geldsenders (z. B. Papillarlinien- oder Retinamuster), der bzw. die zur fallweisen Autorisierung von Geldübertragungen genutzt werden. Dieser Code bzw. diese Daten werden am Lesegerät selbst oder an einem diesem zugeordneten Eingabegerät eingegeben, über das zugehörige Endgerät zum Transaktions-Server übermittelt und dort mit den entsprechenden hinterlegten Daten verglichen. Im Ergebnis des Vergleiches wird die Transaktion freigegeben oder gesperrt. Beim Einsatz der vorgeschlagenen Lösung in realen Läden, gastronomischen Einrichtungen etc. erfolgt die Eingabe des zu übertragenden Geldbetrages vorzugsweise durch eine mit dem Lesegerät verbundene Kasse, wodurch Eingabefehler und Manipulationen praktisch ausgeschlossen werden.

Die erwähnten Autorisierungsschritte werden in einer bevorzugten Verfahrensdurchführung bei Kleinstbeträgen nicht ausgeführt, sondern nur bei einen vorbestimmten Schwellwert übersteigenden Geldbeträgen. Dieser Schwellwert ist vorteilhafterweise durch den Dienstbetreiber oder den Geldsender selbst einstell- bzw. änderbar.

Die vorgeschlagene Lösung, die sinnbildlich auch als "Prepaid-Shopping-Anwendung" bezeichnet werden kann, umfaßt die Funktionsblöcke (1) Start des Geldübertragungsverfahrens, (2) Abbuchung beim Geldsender und (3) Aufbuchung beim Geldempfänger. Diese Funktionsblöcke können auf ein und demselben oder verschiedenen Servern ablaufen, für den bzw. die zusammenfassend der Begriff "Transaktions-Server" steht. Der oder die Server kann bzw. können zentral bei einem Dienstbetreiber oder in mehreren Hardware-Implementierungen bei diesem oder auch bei mehreren Dienstbetreibern existieren. Die Prepaid-Shopping-Anwendung hat - wie oben bereits erwähnt - Zugriff auf eine "Shopping-Datenbank", die (je nach konkretem Netzund Anwendungskonzept) ebenfalls zentral an einer Stelle, verteilt an mehreren Stellen oder auch in mehreren Kopien an verschiedenen Stellen vorliegen kann.

Verfahren und Anordnung gestalten sich am einfachsten, wenn das Prepaid-Guthaben des Geldsenders, das Zielkonto des Geldempfängers und die Prepaid-Shopping-Anwendung selbst bei ein und demselben Dienstbetreiber verwaltet bzw. betrieben werden. Ist dies nicht der Fall, muß ein (als solches bekanntes) Clearing über die Geldübertragung stattfinden. Für diesen Vorgang können die beim Ab- und Aufbuchungsvorgang erstellten Dokumentationen, insbesondere als sogenannte Log-Records, eingesetzt werden.

Das vorgeschlagene System erbringt (neben bereits genannten Vorteilen) den wesentlichen Vorteil, daß das auf einem Prepaidkonto vorhandene elektronische Geld nicht nur für die Bezahlung einer eng spezifizierten Dienstleistung (speziell von Telefongesprächen), sondern in vielfältiger Weise für die Bezahlung von Waren, Dienstleistungen, Informationen etc. in realen wie auch in virtuellen Verkaufseinrichtungen aller Art genutzt werden kann. Über die Vorausbezahlung des Guthabens hat der Nutzer eine strenge Kostenkontrolle, und eine unbeabsichtigte Verschuldung ist prinzipiell ausgeschlossen. Damit ist dieses Verfahren besonders vorteilhaft auch für Minderjährige (oder auch für nicht mehr im vollem Besitz ihrer geistigen Kräfte befindliche ältere Menschen) einsetzbar, für die es bislang keine vergleichbare Anwendung gibt. Für die Bezahlung von Waren oder Dienstleistungen verschiedener Anbieter sind nicht länger mehrere Prepaid-Karten oder -Endgeräte erforderlich, sondern nur ein einziger Datenträger, auf dem eine einzige Prepaid-Rufnummer gespeichert ist.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Figur 1 ein stark vereinfachtes Funktions-Blockschaltbild einer Ausführungsform der erfindungsgemäßen Anordnung und
Figur 2 eine schematische Darstellung der wesentlichen Schritte des ersten Funktionsblocks der vorgeschlagenen Anwendung bei der Anordnung nach Fig. 1.

Die Figuren sind im wesentlichen selbsterklärend, wenn beachtet wird, daß die Kürzel S: MSISDN eine Prepaid-Rufnummer des Geldsenders, E: MSISDN die entsprechende Rufnummer des Geldempfängers und VIN den oben erwähnten Validierungscode bezeichnen.

Zur Durchführung der Geldübertragung wird die Prepaid-Rufnummer (speziell Mobilfunknummer) sowie die VIN des Geldsenders aus dessen Datenträger über das Lesegerät eingegeben. Die Prepaid-Rufnummer enthält eine initiale Ziffernfolge, die zur Identifizierung des Geldübertragungsverfahrens dient. Nachdem der Datenträger gelesen wurde, wird daher durch das entsprechende Endgerät eine Datenverbindung zu der Shopping-Datenbank aufgebaut. (Alternativ kann das Anwählen der Shopping-Datenbank nach dem Lesen des Datenträgers auch manuell oder über einen Preselektion-Modus erfolgen.)

Nach Herstellung der Verbindung werden die folgenden Daten zur Shopping-Datenbank übertragen: die Zielkontonummer des Empfängers, der zu übertragende Geldbetrag, die Prepaid-Rufnummer des Geldsenders und die VIN. Ist ein Kassensystem an das Lesegerät angeschlossen, erfolgt die Eingabe des Geldbetrages automatisch über die Kasse, anderenfalls kann der Betrag beispielsweise manuell über eine Tastatur des Lesegerätes eingegeben werden.

Nach Übermittlung der Daten, mit dem das Geldübertragungsverfahren gestartet ist, folgt ein Prüfungsvorgang im Hinblick darauf, ob der Datenträger gültig und der Betrag auf dem Prepaid-Konto des Geldsenders für den vorgesehenen Übertragungsvorgang ausreichend ist. Ist beides der Fall, wird der Geldsender aufgefordert, die Abbuchung des zu übertragenden Geldbetrages durch Eingabe seiner PIN zu autorisieren.

Im Rahmen des Prüfungsvorganges greift die Prepaid-Shopping-Anwendung auf die Shopping-Datenbank zu und liest den Geldempfänger-Datensatz und den (zweiten) Geldsender-Datensatz mit den darin enthaltenden Informationen, auf welchem Server bzw. welchen Servern (und bei welchem Betreiber bzw. welchen Betreibern) sich die Konten des Geldempfängers und Geldsenders befinden. Der Server des Geldsenders wird identifiziert, und es wird - falls es sich um einen anderen Server handelt als denjenigen, auf dem die Prepaid-Shopping-Anwendung läuft, eine Echtzeitverbindung zu einer auf diesem fremden Server laufenden Prepaid-Shopping-Anwendung aufgebaut.

Anschließend wird überprüft, ob die auf dem gelesenen Datenträger des Geldsenders hinterlegte VIN mit der im zweiten Geldsender-Datensatz hinterlegten VIN übereinstimmt. Ist dies nicht der Fall, ist der Datenträger ungültig, und die Geldübertragung wird mit einem entsprechenden Signal an das Endgerät des Geldempfängers abgebrochen. Ist der Datenträger gültig, wird an die Prepaid-Shopping-Anwendung auf dem Server des Geldsenders eine Aufforderung zur Prüfung übermittelt, ob das elektronische Guthaben auf dem Prepaid-Konto des Geldsenders für die vorgesehene Geldübertragung ausreicht. Ist dies nicht der Fall, wird die Übertragung mit einem entsprechenden Hinweissignal an das Endgerät des Geldempfängers abgebrochen. Ist der zu übertragende Geldbetrag gedeckt, wird er auf dem Prepaid-Konto des Geldsenders reserviert.

Anschließend erfolgt die erwähnte Autorisierung per Eingabe der PIN durch den Geldsender am Lesegerät des Geldempfängers. Die eingegebene PIN wird mit der im zweiten Geldsender-Datensatz hinterlegten PIN verglichen. Ist sie gültig, wird der Abbuchungsvorgang eingeleitet. Ist sie ungültig, wird die Transaktion an dieser Stelle abgebrochen und wiederum ein entsprechendes Hinweissignal übermittelt.

Es folgt die Abbuchung des zu übertragenden Geldbetrages vom Prepaid-Konto des Geldsenders. Dieser Vorgang ist zeitkritisch und erfolgt in Echtzeit. Befindet sich das Prepaid-Konto des Geldsenders auf dem gleichen Server wie die Prepaid-Shopping-Applikation, kann das Guthaben sofort (in Echtzeit) um den zu übertragenden Geldbetrag reduziert werden. Befindet sich das Konto auf einem fremden Server, muß die Abbuchungsanforderung an die dortige Prepaid-Shopping-Anwendung gestellt werden, und die Abbuchung erfolgt unter deren Regime. In jedem Falle wird über den Abbuchungsvorgang ein Log-Record erstellt und der Geldempfänger über das Kassensystem oder einen Anruf oder per SMS o. ä. über die Ausführung der Abbuchung informiert.

Es folgt die Aufbuchung des zu übertragenden Geldbetrages auf das Konto des Geldempfängers, bei dem es sich um ein Prepaid-Konto, ein Realtime-Account oder ein normales Bank-Girokonto handeln kann. Dieser Vorgang ist nicht zeitkritisch, muß aber mit höchster Zuverlässigkeit erfolgen. Auch hierbei sind die oben für das Abbuchen erwähnten Varianten zu unterscheiden - je nachdem, ob das Konto auf einem fremden Server geführt wird oder nicht. Auch für den Aufbuchungsvorgang wird ein Log-Record erstellt.

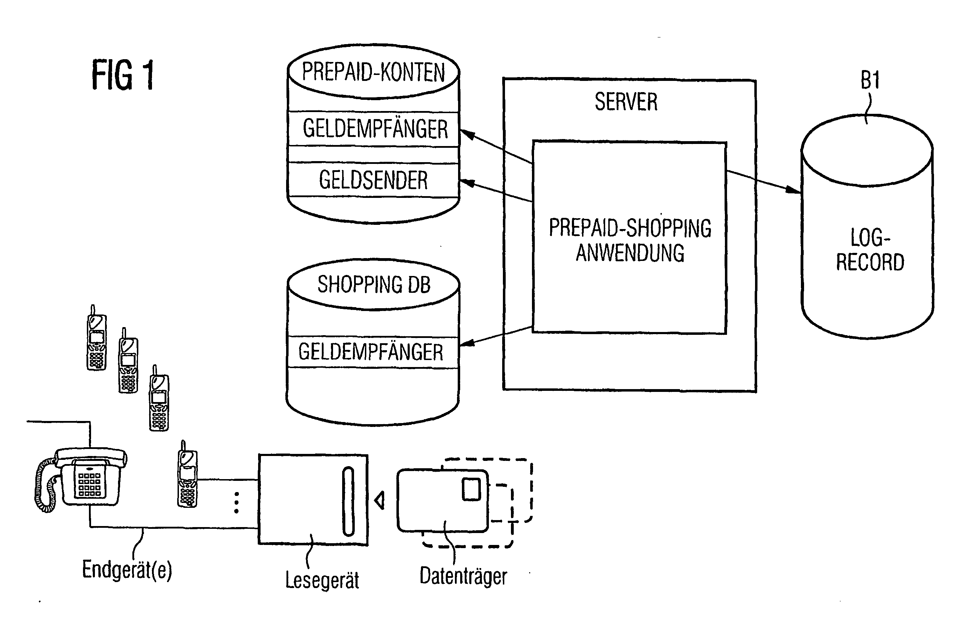

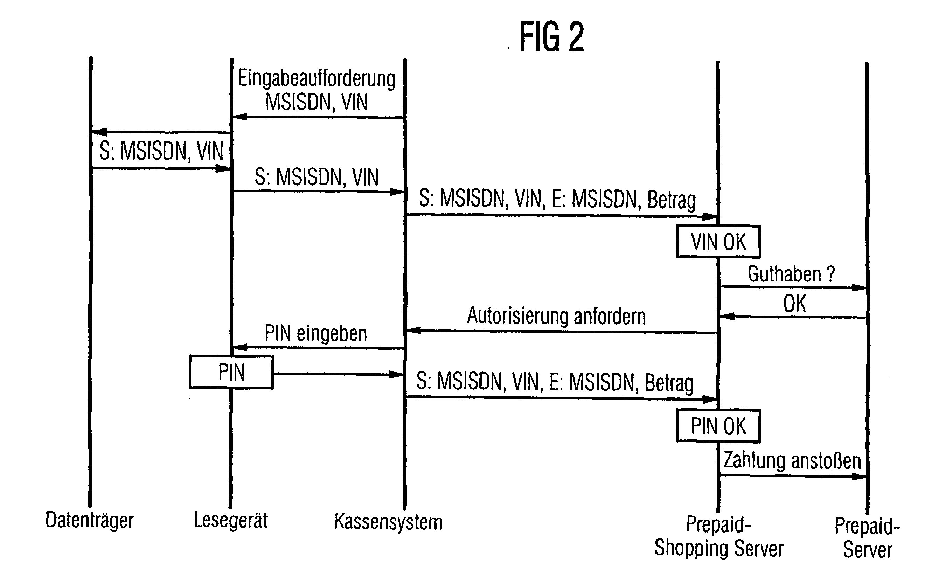

Es wird darauf hingewiesen, daß in Fig. 1 davon ausgegangen wird, daß die Prepaid-Shopping-Anwendung auf demselben Server läuft, auf dem auch Prepaid-Konten des Geldempfängers und Geldsenders geführt werden. In Fig. 2 ist dagegen vorausgesetzt, daß zumindest das Prepaid-Konto des Geldsenders auf einem anderen Server als demjenigen verwaltet wird, auf dem die Prepaid-Shopping-Anwendung läuft.

Die Ausführung der Erfindung ist nicht auf die erwähnten Beispiele, Varianten und Aspekte beschränkt, sondern im Rahmen der Ansprüche ebenso in einer Vielzahl von Abwandlungen möglich, die im Rahmen fachgemäßen Handelns liegen. Insbesondere sind die oben beschriebenen Verfahrensschritte auch in anderer Reihenfolge möglich.

## Patentansprüche

1. Verfahren zur Übertragung eines elektronischen Geldbetrages aus einem Geldsender-Guthabenspeicher, der insbesondere ein vorausbezahltes Guthaben aufweist, auf ein Konto eines Geldempfängers bzw. in einen Geldempfänger-Guthabenspeicher über ein Telekommunikations- und Datennetz in Echtzeit, bei dem nach
- Speicherung eines ersten Geldsender-Datensatzes, der mindestens eine dem Geldsender-Guthabenspeicher zugeordnete Prepaid-Rufnummer im Telekommunikationsnetz umfaßt, auf einem Datenträger des Geldsenders oder in einem Speicher eines Geldsender-Endgerätes,
- Speicherung eines zweiten Geldsender-Datensatzes, der mindestens die Prepaid-Rufnummer, einen Konto-Identifikator des Geldsender-Guthabenspeichers und einen Authentisierungsdatensatz umfaßt, in einer Transaktions-Datenbasis,
- Subskription eines Geldübertragungs-Dienstes durch den Geldempfänger bei einem Dienstbetreiber unter Speicherung eines Geldempfänger-Datensatzes, der mindestens einen Konto-Identifikator des Kontos bzw. des Geldempfänger-Guthabenspeichers und eine Rufnummer eines Geldempfänger-Endgerätes des Geldempfängers im Telekommunikationsnetz umfaßt, in der Transaktions-Datenbasis, folgende Verfahrensschritte durchgeführt werden:
- unmittelbares Lesen des ersten Geldsender-Datensatzes von dem Datenträger des Geldsenders oder aus dem Geldsender-Endgerät mittels eines dem Geldempfänger-Endgerät zugeordneten Lesegerätes,
- Eingabe des zu übertragenden Geldbetrages an dem Lesegerät oder einem Zusatzgerät,
- Aufbau einer Verbindung zwischen dem Geldempfänger-Endgerät und einem Transaktions-Server des Dienstbetreibers aufgrund eines Teiles der Prepaid-Rufnummer,
- Übermittlung eines Geldübertragungs-Datensatzes, der mindestens den Geldbetrag, den Konto-Identifikator des Geldempfängers und die Prepaid-Rufnummer des Geldsenders umfaßt, an den Transaktions-Server,
- Auslesen aus der Transaktions-Datenbasis und Auswertung des Geldempfänger-Datensatzes und des zweiten Geldsender-Datensatzes durch den Transaktions-Server,
- Prüfung der Deckung des Geldbetrages im Geldsender-Guthabenspeicher und Reservierung des Geldbetrages im Deckungsfall bzw. Abbruch mit Signalisierung im Unterdeckungsfall
- Abbuchung des Geldbetrages aus dem Geldsender-Guthabenspeicher und Dokumentation derselben, und
- Aufbuchung des Geldbetrages auf das Geldempfänger-Konto bzw. den Geldempfänger-Guthabenspeicher und Dokumentation derselben.
- Übermittlung einer Information über die Ab- und/oder die Aufbuchung an das Geldempfänger-Endgerät des Geldempfängers.

2. Verfahren nach einem der vorhergehenden Ansprüche,
**dadurch gekennzeichnet, daß**
als erster Geldsender-Datensatz ein Geldsender-Datensatz mit einem Validierungscode verwendet wird, der auch mindestens Teil des Authentisierungsdatensatzes im zweiten Geldsender-Datensatz ist, wobei die im zweiten Geldsender-Datensatz gespeicherte Fassung durch einen den Geldsender-Guthabenspeicher verwaltenden Dienstbetreiber zugreif- und änderbar ist.

3. Verfahren nach einem der vorhergehenden Ansprüche,
**dadurch gekennzeichnet, daß**
als Authentisierungsdatensatz im zweiten Geldsender-Datensatz ein Authentisierungsdatensatz mit einem Authentisierungscode und/oder mit biometrischen Daten des Geldsenders verwendet wird, und vor dem Schritt der Abbuchung Schritte zur Autorisierung derselben ausgeführt werden, nämlich die Schritte:
- Eingabe des Authentisierungscodes bzw. der biometrischen Daten durch den Geldsender an einem Eingabegerät,
- Übermittlung derselben zum Transaktions-Server und
- Vergleich der übermittelten mit den im zweiten Geldsender-Datensatz vorliegenden Daten und Ausgabe eines Abbuchungs-Freigabesignals bei Übereinstimmung bzw. eines Abbuchungs-Sperrsignals bei Nichtübereinstimmung.

4. Verfahren nach Anspruch 3,
**dadurch gekennzeichnet, daß**
die Schritte zur Autorisierung bei einem einen vorbestimmten Schwellwert übersteigenden Geldbetrag ausgeführt werden.

5. Verfahren nach einem der vorangehenden Ansprüche,
**gekennzeichnet durch**
die Ausführung unter Herstellung einer Datenverbindung zu mindestens einem externen Server, auf dem der Geldsender-Guthabenspeicher und/oder das Geldempfänger-Konto bzw. der Geldempfänger-Guthabenspeicher verwaltet werden, wobei der Konto-Identifikator des Geldempfänger-Datensatzes und/oder der Konto-Identifikator des zweiten Geldsender-Datensatzes eine Serveradresse oder -rufnummer umfaßt und der Transaktions-Server sich mit dieser bzw. diesen nach dem Schritt des Auslesens des Geldempfänger-Datensatzes und des zweiten Geldsender-Datensatzes zur Ausführung der nachfolgenden Schritte verbindet.

6. Verfahren nach einem der vorangehenden Ansprüche,
**dadurch gekennzeichnet, daß**
die Eingabe des Geldbetrages über eine mit dem Lesegerät zusammenwirkende Kasse selbsttätig erfolgt.

7. Verfahren nach einem der vorangehenden Ansprüche,
**dadurch gekennzeichnet, daß**
das Lesen des ersten Geldsender-Datensatzes durch drahtlose Nachrichtenübertragung, insbesondere mittels Infrarot- oder Bluetooth-Übertragung, aus dem Endgerät des Geldsenders erfolgt.

8. Verfahren nach einem der vorangehenden Ansprüche,
**dadurch gekennzeichnet, daß**
die Subskription des Geldempfängers beim Dienstbetreiber mit einer Mehrzahl von Konten und/oder Rufnummern erfolgt, wobei insbesondere die Anzahl der Konten kleiner als die der Rufnummern ist, und wobei alle entsprechenden Konto-Identifikatoren und die Rufnummern im Geldempfänger-Datensatz gespeichert werden.

9. Anordnung zur Übertragung eines elektronischen Geldbetrages aus einem Geldsender-Guthabenspeicher, der insbesondere ein vorausbezahltes Guthaben aufweist, auf ein Konto eines Geldempfängers bzw. in einen Geldempfänger-Guthabenspeicher über ein Telekommunikations- und Datennetz in Echtzeit, insbesondere zur Durchführung des Verfahrens nach einem der vorangehenden Ansprüche, welche aufweist:
- mindestens einen Kontoführungs-Server mit dem Geldsender-Guthabenspeicher und dem Konto des Geldempfängers bzw. Geldempfänger-Guthabenspeicher,
- einen Datenträger des Geldsenders oder ein Geldsender-Endgerät, in dem ein erster Geldsender-Datensatz gespeichert ist, welcher mindestens eine dem Geldsender-Guthabenspeicher zugeordnete Prepaid-Rufnummer in einem Telekommunikationsnetz umfaßt,
- ein an das Telekommunikations- und Datennetz angeschlossenes Geldempfänger-Endgerät, ein mit dem Geldempfänger-Endgerät verbundenes Lesegerät, welches zum unmittelbaren Lesen des ersten Geldsender-Datensatzes aus dem Datenträger oder dem Geldsender-Endgerät ausgebildet ist,
- eine Transaktions-Datenbasis eines Dienstbetreibers, in der ein Geldempfänger-Datensatz, der mindestens einen Konto-Identifikator des Kontos des Geldempfängers bzw. Geldempfänger-Guthabenspeichers und die Rufnummer des Geldempfänger-Endgerätes umfaßt, und ein zweiter Geldsender-Datensatz gespeichert sind, der mindestens die Prepaid-Rufnummer, einen Konto-Identifikator des Geldsender-Guthabenspeichers und einen Authentisierungsdatensatz umfaßt, und
- einen Transaktions-Server, der mit der Transaktions-Datenbasis verbunden und mit dem Geldempfänger-Endgerät sowie dem Kontoführungs-Server oder den Kontoführungs-Servern verbindbar oder mit letzterem bzw. letzteren integral ausgeführt ist, zum Auslesen des Geldempfänger-Datensatzes und des zweiten Geldsender-Datensatzes aus der Transaktions-Datenbasis, zum Empfang des ersten Geldsender-Datensatzes und zur Auswertung der Datensätze und zur Steuerung einer Deckungsprüfung im Geldsender-Guthabenspeicher sowie einer Abbuchung von dem Geldsender-Guthabenspeicher und einer Aufbuchung auf das Geldempfänger-Konto bzw. den Geldempfänger-Guthabenspeicher.

10. Anordnung nach Anspruch 9,
**dadurch gekennzeichnet, daß**
die Transaktions-Datenbasis und der Geldsender-Guthabenspeicher und/oder der Geldempfänger-Guthabenspeicher auf dem Transaktions-Server implementiert sind.

11. Anordnung nach Anspruch 9 oder 10,
**dadurch gekennzeichnet, daß**
der Transaktions-Server Mittel zur Dokumentierung eines Abbuchungsvorganges und eines Aufbuchungsvorganges, insbesondere als Log-Record, aufweist.

12. Anordnung nach einem der Ansprüche 9 bis 11,
**dadurch gekennzeichnet, daß**
dem Transaktions-Server Telekommunikationsmittel zur Signalisierung eines Transaktionsabbruches oder einer Abbuchung und/oder einer Aufbuchung mindestens an das Endgerät des Geldempfängers zugeordnet sind.

13. Anordnung nach einem der Ansprüche 9 bis 12,
**dadurch gekennzeichnet, daß**
das Telekommunikations- und Datennetz ein Mobilfunknetz umfaßt, wobei insbesondere das Endgerät des Geldempfängers und/oder das Endgerät des Geldsenders als Mobilfunk-Endgerät ausgebildet ist.

14. Anordnung nach einem der Ansprüche 9 bis 13,
**dadurch gekennzeichnet, daß**
der Datenträger des Geldsenders als Chipkarte oder Magnetstreifenkarte und das Lesegerät des Geldempfängers als entsprechendes Kartenlesegerät ausgebildet sind.

15. Anordnung nach einem der Ansprüche 9 bis 14,
**dadurch gekennzeichnet, daß**
an das Lesegerät des Geldempfängers eine Kasse zur selbsttätigen Eingabe des Geldbetrages und/oder eine Eingabetastatur zur Eingabe eines Authentisierungscodes und wahlweise des Geldbetrages und/oder der Serveradresse oder Rufnummer des Transaktions-Servers angeschlossen ist.

16. Anordnung nach einem der Ansprüche 9 bis 13 oder 15,
**dadurch gekennzeichnet, daß**
das Lesegerät des Geldempfängers eine drahtlose Datenschnittstelle zum Auslesen des ersten Geldsender-Datensatzes aus dem Endgerät des Geldsenders an das Endgerät des Geldempfängers aufweist.

17. Anordnung nach einem der Ansprüche 9 bis 16,
**gekennzeichnet durch**
eine Mehrzahl von beim Dienstbetreiber registrierten Endgeräten des Geldempfängers, deren Rufnummern in dem Geldempfänger-Datensatz gespeichert sind.

18. Anordnung nach einem der Ansprüche 9 bis 17,
**gekennzeichnet durch**
eine Mehrzahl von Datenträgern oder Endgeräten des Geldsenders, in denen jeweils ein gültiger erster Geldsender-Datensatz gespeichert ist.

## Claims

1. Method for transferring an electronic sum of money from a money sender credit memory, particularly containing a prepaid credit, to an account belonging to a money receiver or to a money receiver credit memory via a telecommunications and data network in real time, in which, after
- a first money sender data record, comprising at least one prepaid call number associated with the money sender credit memory in the telecommunications network, has been stored on a data storage medium belonging to the money sender or in a memory in a money sender terminal,
- a second money sender data record, comprising at least the prepaid call number, an account identifier for the money sender credit memory and an authentication data record, has been stored in a transaction database,
- the money receiver has subscribed to a money transfer service with a service operator and has stored a money receiver data record, comprising at least one account identifier for the account or for the money receiver credit memory and a call number for a money receiver terminal belonging to the money receiver in the telecommunications network, in the transaction database, the following method steps are carried out:
- the first money sender data record is immediately read from the money sender's data storage medium or from the money sender terminal using a reader associated with the money receiver terminal,
- the sum of money to be transferred is input on the reader or on an additional appliance,
- a connection is set up between the money receiver terminal and a transaction server belonging to the service operator on the basis of part of the prepaid call number,
- a money transfer data record, comprising at least the sum of money, the money receiver's account identifier and the money sender's prepaid call number, is transmitted to the transaction server,
- the transaction server reads the transaction database and evaluates the money receiver data record and the second money sender data record,
- the coverage of the sum of money is checked in the money sender credit memory, and the sum of money is reserved if it is covered, or the process is terminated with signalling if there is insufficient coverage,
- the sum of money is debited from the money sender credit memory, and this is documented, and
- the sum of money is credited to the money receiver account or to the money receiver credit memory, and this is documented,
- information about the debit and/or credit operation is transmitted to the money receiver's money receiver terminal.

2. Method according to one of the preceding claims,
**characterized in that**
the first money sender data record used is a money sender data record having a validation code which is also at least part of the authentication data record in the second money sender data record, the version stored in the second money sender data record being able to be accessed and changed by a service operator which manages the money sender credit memory.

3. Method according to one of the preceding claims,
**characterized in that**
the authentication data record used in the second money sender data record is an authentication data record having an authentication code and/or having biometric data for the money sender, and, before the debit operation step, steps for authorizing said debit operation are performed, namely the following steps:
- the authentication code and/or the biometric data is/are input by the money sender on an input device,
- the input is transmitted to the transaction server, and
- the transmitted data are compared with the data held in the second money sender data record, and a debit enable signal is output if there is a match and a debit blocking signal is output if there is no match.

4. Method according to Claim 3,
**characterized in that**
the authorization steps are performed for a sum of money which exceeds a predetermined threshold value.

5. Method according to one of the preceding claims,
**characterized by**
its being performed by setting up a data link to at least one external server on which the money sender credit memory and/or the money receiver account or the money receiver credit memory are managed, the account identifier of the money receiver data record and/or the account identifier of the second money sender data record comprising a server address or server call number, and the transaction server being connected to this or these following the step of reading out the money receiver data record and the second money sender data record in order to perform the subsequent steps.

6. Method according to one of the preceding claims,
**characterized in that**
the sum of money is input autonomously by means of a cash register which co-operates with the reader.

7. Method according to one of the preceding claims,
**characterized in that**
the first money sender data record is read from the money sender's terminal by wireless message transmission, particularly by means of infrared or Bluetooth transmission.

8. Method according to one of the preceding claims,
**characterized in that**
the money receiver takes out the subscription with the service operator using a plurality of accounts and/or call numbers, the number of accounts being less than the number of call numbers, in particular, and all the corresponding account identifiers and the call numbers being stored in the money receiver data record.

9. Arrangement for transferring an electronic sum of money from a money sender credit memory, particularly containing a prepaid credit, to an account belonging to a money receiver or to a money receiver credit memory via a telecommunications and data network in real time, particularly in order to carry out the method according to one of the preceding claims, which has:
- at least one account management server having the money sender credit memory and the account belonging to the money receiver or money receiver credit memory,
- a data storage medium belonging to the money sender or a money sender terminal storing a first money sender data record which comprises at least one prepaid call number associated with the money sender credit memory in a telecommunications network,
- a money receiver terminal connected to the telecommunications and data network, a reader which is connected to the money receiver terminal and is designed for directly reading the first money sender data record from the data storage medium or from the money sender terminal,
- a service operator transaction database storing a money receiver data record, which comprises at least one account identifier for the money receiver's account or money receiver credit memory and the call number of the money receiver terminal, and a second money sender data record, which comprises at least the prepaid call number, an account identifier for the money sender credit memory and an authentication data record, and
- a transaction server which is connected to the transaction database and can be connected to the money receiver terminal and to the account management server or to the account management servers or is an integral part of said server or servers, for reading the money receiver data record and the second money sender data record from the transaction database, for receiving the first money sender data record and for evaluating the data records and for controlling a coverage check in the money sender credit memory and a debit operation on the money sender credit memory and a credit operation on the money receiver account or money receiver credit memory.

10. Arrangement according to Claim 9,
**characterized in that**
the transaction database and the money sender credit memory and/or the money receiver credit memory are implemented on the transaction server.

11. Arrangement according to Claim 9 or 10,
**characterized in that**
the transaction server has means for documenting a debit operation and a credit operation, particularly in the form of a log record.

12. Arrangement according to one of Claims 9 to 11,
**characterized in that**
the transaction server has associated telecommunication means for signalling the termination of a transaction or for signalling a debit operation and/or a credit operation at least to the money receiver's terminal.

13. Arrangement according to one of Claims 9 to 12,
**characterized in that**
the telecommunications and data network comprises a mobile radio network, with, in particular, the money receiver's terminal and/or the money sender's terminal being in the form of a mobile radio terminal.

14. Arrangement according to one of Claims 9 to 13,
**characterized in that**
the money sender's data storage medium is in the form of a chip card or magnetic strip card, and the money receiver's reader is in the form of a corresponding card reader.

15. Arrangement according to one of Claims 9 to 14,
**characterized in that**
the money receiver's reader has a cash register for autonomously inputting the sum of money and/or an input keypad for inputting an authentication code and optionally the sum of money and/or the transaction server's server address or call number connected to it.

16. Arrangement according to one of Claims 9 to 13 or 15,
**characterized in that**
the money receiver's reader has a wireless data interface for reading the first money sender data record from the money sender's terminal to the money receiver's terminal.

17. Arrangement according to one of Claims 9 to 16,
**characterized by** a plurality of terminals belonging to the money receiver which are registered with the service operator and whose call numbers are stored in the money receiver data record.

18. Arrangement according to one of Claims 9 to 17,
**characterized by** a plurality of data storage media or terminals belonging to the money sender which respectively store a valid first money sender data record.

## Revendications

1. Procédé pour transmettre une somme d'argent électronique à partir d'une mémoire d'avoir d'un expéditeur, en particulier pourvue d'un avoir payé d'avance, jusque sur un compte d'un destinataire ou dans une mémoire d'avoir d'un destinataire par l'intermédiaire d'un réseau de télécommunication ou de données en temps réel,
selon lequel après que
- un premier enregistrement d'expéditeur qui comprend au moins un numéro d'appel prépayé associé à la mémoire d'avoir de l'expéditeur dans le réseau de télécommunication a été mémorisé sur un support de données de l'expéditeur ou dans une mémoire d'un terminal de l'expéditeur,
- un deuxième enregistrement d'expéditeur qui comprend au moins le numéro d'appel prépayé, un identificateur de compte lié à la mémoire d'avoir de l'expéditeur et un enregistrement d'autorisation a été mémorisé dans une base de données des transactions et
- dans la base de données des transactions un service de transfert monétaire a été souscrit par le destinataire auprès d'un prestataire de services en mémorisant un enregistrement de destinataire qui comprend au moins un identificateur du compte ou de la mémoire d'avoir du destinataire et un numéro d'appel d'un terminal du destinataire dans le réseau de télécommunication,
on exécute les étapes suivantes du procédé :
- le premier enregistrement de l'expéditeur est lu immédiatement par le support de données de l'expéditeur ou par le terminal de l'expéditeur à l'aide d'un lecteur associé au terminal du destinataire,
- la somme d'argent à transmettre est entrée sur le lecteur ou sur un appareil auxiliaire,
- une liaison est établie entre le terminal du destinataire et un serveur de transaction propre au prestataire de services sur la base d'une partie du numéro d'appel prépayé,
- un enregistrement de transfert monétaire est transmis au serveur de la transaction, il comprend au moins la somme d'argent, l'identificateur de compte du destinataire et le numéro d'appel prépayé de l'expéditeur,
- la base de données des transactions est lue et l'enregistrement du destinataire ainsi que le deuxième enregistrement de l'expéditeur sont exploités par le serveur de transaction,
- la provision de la somme d'argent est vérifiée dans la mémoire d'avoir de l'expéditeur et la somme d'argent est réservée si la provision est suffisante ou la transaction est interrompue en émettant un signal si la provision est insuffisante,
- la somme d'argent est débitée sur la mémoire d'avoir de l'expéditeur et une documentation est établie à ce sujet,
- la somme d'argent est créditée sur le compte du destinataire ou sur la mémoire d'avoir du destinataire et une documentation est établie à ce sujet,
- une information concernant le débit et/ou le crédit est transmise au terminal du destinataire.

2. Procédé selon la revendication 1, **caractérisé en ce que**
le premier enregistrement d'expéditeur qu'on utilise est un enregistrement d'expéditeur comportant un code de validation qui fait aussi au moins partie de l'enregistrement d'authentification dans le deuxième enregistrement d'expéditeur, la version mémorisée dans le deuxième enregistrement d'expéditeur pouvant être lue ou modifiée par un prestataire de services qui gère la mémoire d'avoir de l'expéditeur.

3. Procédé selon l'une des revendications précédentes, **caractérisé en ce que** l'enregistrement d'authentification qu'on utilise dans le deuxième enregistrement d'expéditeur est un enregistrement d'authentification comportant un code d'authentification et/ou des données biométriques de l'expéditeur et avant l'étape de crédit on exécute les étapes destinées à l'autoriser, à savoir
- le code d'authentification ou les données biométriques sont entrées par l'expéditeur sur un périphérique d'entrée,
- ils sont transmis au serveur de transaction et
- les données transmises sont comparées avec les données présentes dans le deuxième enregistrement d'expéditeur et un signal qui libère le débit est émis en cas de correspondance ou un signal qui bloque le débit en cas de non correspondance.

4. Procédé selon la revendication 3, **caractérisé en ce que**
les étapes d'autorisation sont exécutées lorsque la somme d'argent dépasse une valeur seuil prédéfinie.

5. Procédé selon l'une des revendications précédentes, **caractérisé en ce que**
il est exécuté en établissant une liaison de données avec au moins un serveur externe sur lequel est gérée la mémoire d'avoir de l'expéditeur et/ou le compte du destinataire ou la mémoire d'avoir du destinataire,
l'identificateur de compte concernant l'enregistrement du destinataire et/ou l'identificateur de compte du deuxième enregistrement de l'expéditeur comprend alors une adresse ou un numéro de serveur et
le serveur de transaction se relie grâce à lui ou à elle après l'étape où l'enregistrement du destinataire et le deuxième enregistrement de l'expéditeur sont lus pour exécuter les étapes suivantes.

6. Procédé selon l'une des revendications précédentes, **caractérisé en ce que**
la somme d'argent est automatiquement entrée par l'intermédiaire d'une caisse qui interagit avec le lecteur.

7. Procédé selon l'une des revendications précédentes, **caractérisé en ce que**
le premier enregistrement d'expéditeur est lu à partir du terminal de l'expéditeur en transmettant sans fil les informations, en particulier par transmission infrarouge ou Bluetooth.

8. Procédé selon l'une des revendications précédentes, **caractérisé en ce que**
le destinataire s'inscrit auprès du prestataire de services en donnant un grand nombre de comptes et/ou de numéros d'appel, en particulier le nombre des comptes est inférieur au nombre des numéros d'appel et tous les identificateurs de compte et tous les numéros d'appel correspondants sont mémorisés dans l'enregistrement du destinataire.

9. Système pour transmettre une somme d'argent électronique à partir d'une mémoire d'avoir d'un expéditeur, en particulier pourvue d'un avoir payé d'avance, jusque sur un compte d'un destinataire ou dans une mémoire d'avoir d'un destinataire par l'intermédiaire d'un réseau de télécommunication ou de données en temps réel, en particulier pour exécuter le procédé selon l'une des revendications précédentes, ce système comprenant
- au moins un serveur de tenue de compte pourvu de la mémoire d'avoir de l'expéditeur et du compte du destinataire ou de la mémoire d'avoir du destinataire
- un support de données de l'expéditeur ou un terminal de l'expéditeur dans lequel est mémorisé un premier enregistrement d'expéditeur qui comprend au moins un numéro d'appel prépayé, associé à la mémoire d'avoir de l'expéditeur, dans un réseau de télécommunication,
- un terminal du destinataire raccordé au réseau de télécommunications et de données, un lecteur relié au terminal du destinataire et conçu pour lire immédiatement le premier enregistrement de l'expéditeur sur le support de données ou sur le terminal de l'expéditeur,
- une base de données des transactions, propre à un prestataire de services, dans laquelle sont mémorisés un enregistrement du destinataire qui comprend au moins un identificateur du compte du destinataire ou de la mémoire d'avoir du destinataire et le numéro d'appel du terminal du destinataire et un deuxième enregistrement d'expéditeur qui comprend au moins le numéro d'appel prépayé, un identificateur de compte de la mémoire d'avoir de l'expéditeur et un enregistrement d'authentification et
- un serveur de transaction qui est relié à la base de données des transactions et qui peut être relié au terminal du destinataire ainsi qu'au(x) serveur(s) de tenue de compte, ou qui lui (leur) est intégré, pour lire l'enregistrement du destinataire et le deuxième enregistrement d'expéditeur dans la base de données des transactions, pour recevoir le premier enregistrement d'expéditeur et pour exploiter les enregistrements et pour commander de vérifier la provision dans la mémoire d'avoir de l'expéditeur ainsi que de débiter la mémoire d'avoir de l'expéditeur et de créditer le compte du destinataire ou la mémoire d'avoir du destinataire.

10. Système selon la revendication 9, **caractérisé en ce que**
la base de données des transactions et la mémoire d'avoir de l'expéditeur et/ou la mémoire d'avoir du destinataire sont installées sur le serveur de transaction.

11. Système selon la revendication 9 ou 10, **caractérisé en ce que**
le serveur de transaction a des moyens pour documenter une opération de débit et une opération de crédit, en particulier sous forme d'un enregistrement historique.

12. Système selon l'une des revendications 9 à 11, **caractérisé en ce que**,
au moins sur le terminal du destinataire, des moyens de communication pour signaler que la transaction est interrompue ou pour signaler un débit et/ou un crédit sont associés au serveur de transaction.

13. Système selon l'une des revendications 9 à 12, **caractérisé en ce que**
le réseau de télécommunications et de données comprend un réseau de téléphonie mobile, en particulier le terminal du destinataire et/ou le terminal de l'expéditeur sont des terminaux de téléphonie mobile.

14. Système selon l'une des revendications 9 à 13, **caractérisé en ce que**
le support de données de l'expéditeur est une carte à puces ou une carte à bande magnétique et le lecteur du destinataire est un lecteur de cartes correspondant.

15. Système selon l'une des revendications 9 à 14, **caractérisé en ce que**
au lecteur du destinataire est reliée une caisse pour entrer automatiquement la somme d'argent et/ou un clavier d'introduction pour entrer un code d'authentification et en option la somme d'argent et/ou l'adresse du serveur ou le numéro d'appel du serveur de transaction.

16. Système selon l'une des revendications 9 à 13 ou 15, **caractérisé en ce que**
le lecteur du destinataire présente une interface sans fil pour lire sur le terminal du destinataire le premier enregistrement d'expéditeur provenant du terminal de l'expéditeur.

17. Système selon l'une des revendications 9 à 16, **caractérisé par**
un grand nombre de terminaux du destinataire inscrits auprès du prestataire de services et dont les numéros d'appel sont mémorisés dans l'enregistrement du destinataire.

18. Système selon l'une des revendications 9 à 17, **caractérisé par**
un grand nombre de supports de données ou de terminaux d'expéditeur dans chacun desquels est mémorisé un premier enregistrement valide de l'expéditeur.
